# EUROPEAN PATENT APPLICATION

(11) **EP 3 677 373 A1**
(43) Date of publication of application: **08.07.2020**
(21) Application number: 18850533.3
(22) Date of filing: 26.07.2018
(51) Int. Cl.: B23K 26/08, B23K 26/082

(54) **LASER MACHINING DEVICE AND LASER MACHINING SYSTEM**

(30) Priority: 30.08.2017 JP 2017165337; 30.08.2017 JP 2017165340
(71) Applicant: Roland DG Corporation, Hamamatsu-shi, Shizuoka 431-2103 (JP)
(72) Inventor: MAEDA, Toshio, Hamamatsu-shi Shizuoka 431-2103 (JP)
(74) Representative: Grünecker Patent- und Rechtsanwälte PartG mbB
(86) International application number: PCT/JP2018/028012
(87) International publication number: WO 2019/044294

(57) **Abstract**

Provided is a laser machining device capable of manufacturing an object having a small and complicated shape. The laser machining device includes: an objective optical system for irradiating a workpiece with laser light transmitted from a laser oscillator; a holding unit for holding the workpiece; and a drive mechanism that moves the workpiece along five axes, i.e., an X axis, Y axis, Z axis, first rotation axis, and second rotation axis, said workpiece being held by the objective optical system or the holding unit.

## Description

### [Technical Field]

The present invention relates to a laser beam processing apparatus and a laser beam processing system.

### [Background Art]

Processing apparatuses designed to cut a workpiece to obtain a target object are known. Such processing apparatuses have a plurality of drive axes. A processing apparatus having five axes, for example, can process a target object having a complex shape by controlling movement of a table on which a workpiece is placed to the left and right (X axis), forward and rearward (Y axis), and upward and downward (Z axis), as well as controlling rotation and inclination of the table.

Examples of target objects processed by such processing apparatuses include dental prostheses and other such target objects that are small and have a complex shape. Processing apparatuses for processing such prostheses are exemplified by the apparatus disclosed in Non-Patent Document 1.

### [Conventional Art Document]

### [Non-Patent Document]

Non-Patent Document 1: "DWX-51D", [online], DGSHAPE Corporation, [retrieved on June 6th 2017], Internet <URL: http://www.rolanddg.co.jp/product/3 d/dental/dwx-51 d/index.html>

### [Summary of Invention]

### [Problems to be Solved by Invention]

In recent years, processing techniques employing laser beams have been developed. As with cutting processing, such techniques can be used to process a variety of target objects.

There are, however, no conventional laser beam processing apparatuses that are suitable for creating small target objects having a complex shape, such as dental prostheses.

An objective of the present invention is to provide a laser beam processing apparatus and a laser beam processing system capable of creating small target objects that have a complex shape.

### [Means for Solving Problem]

An aspect of the present invention designed to achieve the above objective is a laser beam processing apparatus including an objective optical system for impinging a laser beam from a laser oscillator onto a workpiece, a retaining unit that retains the workpiece, and a driving mechanism that moves the objective optical system or the workpiece retained by the retaining unit along five axes including an X axis, a Y axis, a Z axis, a first rotation axis, and a second rotation axis. Another aspect of the present invention designed to achieve the above objective is a laser beam processing apparatus including a galvanometer optical system including a first mirror for moving a laser beam from a laser oscillator over a workpiece along an X axis, a second mirror for moving the laser beam over the workpiece along a Y axis, and an adjustment unit for adjusting the location of a focal point of the laser beam in a Z axis direction, a retaining unit that retains the workpiece, a first driving mechanism that causes the first mirror, the second mirror, and the adjustment unit to operate, and a second driving mechanism that moves the workpiece retained by the retaining unit along at least four axes comprising the X axis, the Y axis, a first rotation axis, and a second rotation axis. Other features of the preset invention will be revealed through the disclosure in the description.

### [Effect of Invention]

According to the present invention, a small target object having a complex shape can be created.

### [Brief Description of Drawings]

FIG. 1 is a schematic diagram illustrating outlines of a laser beam processing system and a CAD/CAM system in a first embodiment.
FIG. 2 is a schematic diagram illustrating a detailed configuration of the laser beam processing system in the first embodiment.
FIG. 3 is a perspective diagram illustrating an example of a laser beam processing apparatus in the first embodiment.
FIG. 4 is a perspective diagram illustrating an example of an impingement unit of the laser beam processing apparatus in the first embodiment.
FIG. 5 is a perspective diagram illustrating an example of a retaining unit of the laser beam processing apparatus in the first embodiment.
FIG. 6 is a schematic diagram illustrating a detailed configuration of a laser beam processing system in a second embodiment.
FIG. 7 is a perspective diagram illustrating an example of a laser beam processing apparatus in the second embodiment.
FIG. 8 is a perspective diagram illustrating an example of an impingement unit of the laser beam processing apparatus in the second embodiment.
FIG. 9 is a perspective diagram illustrating an example of a retaining unit of the laser beam processing apparatus in the second embodiment.

### [Detailed Description of Invention]

### <First Embodiment>

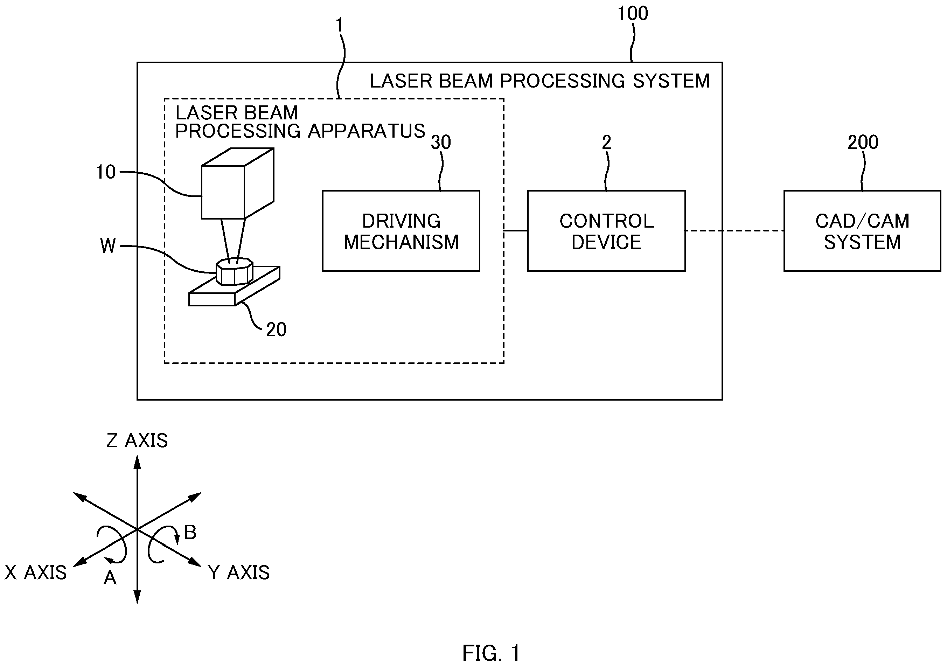

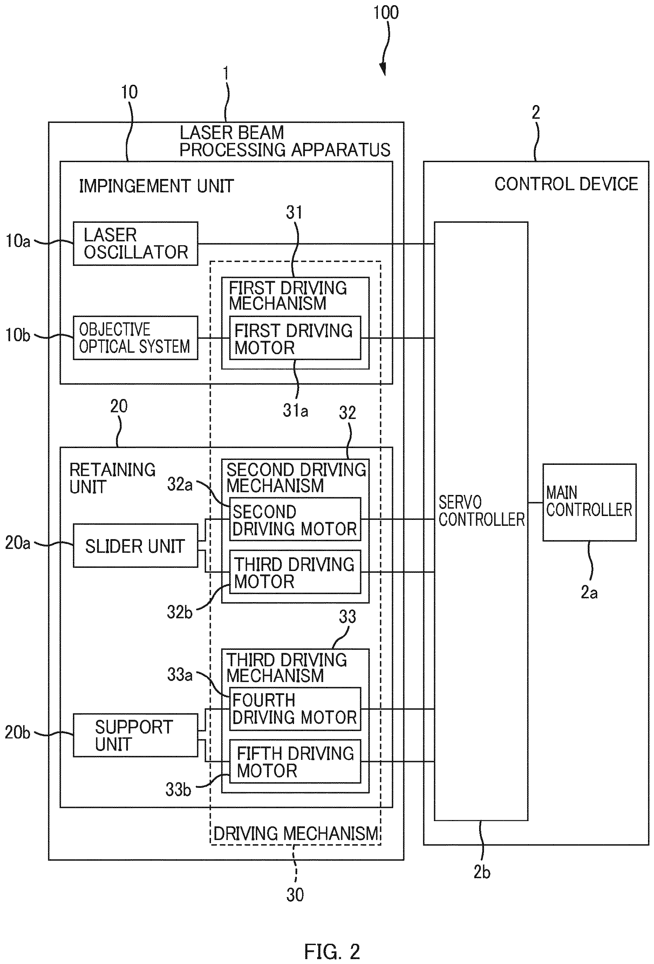

A laser beam processing system 100 and a computer-aided design/computer-aided manufacturing (CAD/CAM) system 200 in this embodiment will be described with reference to FIGS. 1 and 2.

### ==Laser Beam Processing System==

As illustrated in FIG. 1, the laser beam processing system 100 includes a laser beam processing apparatus 1 and a control device 2. The laser beam processing system 100 may be constituted by the laser beam processing apparatus 1 alone given that functions of the control device 2 are implemented by the laser beam processing apparatus 1.

Description of this embodiment will be given using the five axes illustrated in FIG. 1. The five axes are constituted by: an X axis, a Y axis, and a Z axis that are perpendicular to one another; an A rotation axis (first rotation axis) about a given axis from among the three axes; and a B rotation axis (second rotation axis) about another one of the three axes perpendicular to the given axis. In FIG. 1, the A rotation axis is a rotation axis about the X axis and the B rotation axis is a rotation axis about the Y axis. When the rotation angle of the A rotation axis is 0 degrees, the B rotation axis coincides with a rotation axis about the Y rotation axis.

The laser beam processing apparatus 1 can form a target object by processing a workpiece W by moving an impingement unit 10 and a retaining unit 20 relative to each other in accordance with processing data (to be described later) created by the CAD/CAM system 200 while impinging a laser beam.

The workpiece W can be selected from workpieces of a variety of types and shapes, according to the intended target object. To cite an example, when it is intended to create a dental prosthesis, a zirconia-based material (or a completely combusted form thereof) can be used for the workpiece W. To cite another example, when it is intended to form a target object inside a workpiece, a material that transmits laser beams (light-transmissive material) can be used for the workpiece W.

The laser beam processing apparatus 1 in this embodiment includes the impingement unit 10, the retaining unit 20, and a driving mechanism 30. For the sake of convenience, in FIG. 1, the driving mechanism 30 is illustrated in a different block from the impingement unit 10 and the retaining unit 20, but in actuality, the driving mechanism 30 is incorporated in the impingement unit 10 and the retaining unit 20, as illustrated in FIG. 2.

### [Impingement Unit]

The impingement unit 10 impinges a laser beam onto the workpiece W. As illustrated in FIG. 2, the impingement unit 10 includes a laser oscillator 10a and an objective optical system 10b.

The laser oscillator 10a is a configuration for oscillating a laser beam. The laser oscillator 10a is constituted by including, for example, a resonator, a lasing medium, and an excitation light source.

Although there are no particular limitations on the type of laser beam, it is preferred to use an ultrashort-pulsed laser beam when it is intended to, for example, form a target object inside a workpiece. An ultrashort-pulsed laser beam is a laser beam, the width of a single pulse of which is several picoseconds to several femtoseconds. Quick impingement of an ultrashort-pulsed laser beam onto a predetermined location in a workpiece makes it possible to carry out abrasion processing (non-thermal processing). With abrasion processing, the portion having been melted by means of a laser beam momentarily evaporates, scatters, and is removed, so compared to typical laser beam processing (thermal processing), abrasion processing causes less heat-related damage to the portion being processed.

The laser oscillator 10a may not be provided in the laser beam processing apparatus 1 (impingement unit 10) itself. For example, the laser oscillator 10a may be provided separately from the laser beam processing apparatus 1 and a laser beam may be guided into the impingement unit 10 via transmission means, such as an optical fiber.

The objective optical system 10b is a configuration for impinging a laser beam from the laser oscillator 10a onto the workpiece W. The laser beam converges onto a predetermined focal point location via the objective optical system 10b. The objective optical system 10b is configured in the form of a single lens or a plurality of lens groups. In this embodiment, the objective optical system 10b is movable along the Z axis (details will be described later).

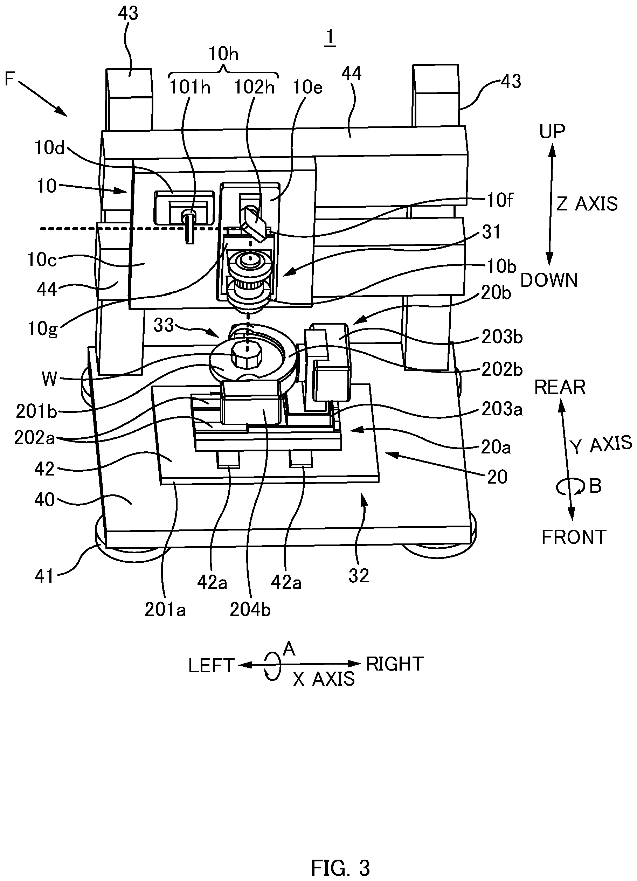

The impingement unit 10 may include, for example, a relay optical system 10f for guiding a laser beam from the laser oscillator 10a to the objective optical system 10b (see FIG. 3, etc.).

### [Retaining Unit]

The retaining unit 20 retains the workpiece W. In this embodiment, the (workpiece W retained by the) retaining unit 20 is movable along the X axis, the Y axis, the A rotation axis, and the B rotation axis (details will be described later). As illustrated in FIG. 2, the retaining unit 20 includes a slider unit 20a and a support unit 20b.

The slider unit 20a receives fixation of the support unit 20b. In this embodiment, the slider unit 20a is movable along the X axis or the Y axis (details will be described later).

The support unit 20b is fixed to the slider unit 20a and supports the workpiece W. The support unit 20b may be configured so as to conform to the shape of the workpiece W to be supported or the shape of the target object. To cite an example, if a plurality of target objects are to be processed from disc-shaped workpieces, the disc-shaped workpieces may be clamped and supported directly by a clamp. It is also possible to attach a metallic pin to a block-shaped workpiece and insert the pin into the support unit 20b so as to support the workpiece. Alternatively, as illustrated in FIG. 3, and the like, the support unit 20b may be configured so as to support the workpiece W indirectly with the workpiece W being placed on a stage 201b. In this embodiment, the (workpiece W supported on the) support unit 20b is movable along the A rotation axis or the B rotation axis (details will be described later).

### [Driving Mechanism]

The driving mechanism 30 moves the objective optical system 10b or the workpiece W retained by the retaining unit 20 along the five axes, i.e. the X axis, the Y axis, the Z axis, the A rotation axis, and the B rotation axis. As illustrated in FIG. 2, the driving mechanism 30 in this embodiment includes a first driving mechanism 31, a second driving mechanism 32, and a third driving mechanism 33.

The first driving mechanism 31 moves the objective optical system 10b along the Z axis. The first driving mechanism 31 includes a first driving motor 31a for moving the objective optical system 10b along the Z axis.

The second driving mechanism 32 moves the slider unit 20a along the X axis or the Y axis. The second driving mechanism 32 includes a second driving motor 32a for moving the slider unit 20a along the X axis and a third driving motor 32b for moving the slider unit 20a along the Y axis. As has been mentioned above, the support unit 20b is fixed to the slider unit 20a, so together with movement of the slider unit 20a, the support unit 20b also moves along the X axis or the Y axis. Thus, together with movement of the slider unit 20a, the workpiece W supported on the support unit 20b also moves along the X axis or the Y axis.

The third driving mechanism 33 moves the workpiece W supported on the support unit 20b along the A rotation axis or the B rotation axis. "Movement" along the A rotation axis or the B rotation axis includes "inclination", which means to incline through a predetermined angle about a given axis, and also "rotation", which means to move through 360 degrees or more about a given axis. The third driving mechanism 33 includes a fourth driving motor 33a for moving the workpiece W supported on the support unit 20b along the A rotation axis and a fifth driving motor 33b for moving the workpiece W supported on the support unit 20b along the B rotation axis.

The driving motors have differing characteristics (current, torque, rotational speed, etc.) according to the configurations which the motors drive; however, some of the driving motors may have the same characteristics.

The control device 2 controls operations of the impingement unit 10 and the driving mechanism 30. As illustrated in FIG. 2, the control device 2 in this embodiment includes a main controller 2a and a servo controller 2b.

The main controller 2a comprehensively controls the operations of the laser beam processing apparatus 1. The main controller 2a may, for example, output a control signal (coordinate values corresponding to the location onto which a laser beam is to be impinged, the spot diameter or intensity of a laser beam to be impinged, etc.) for processing the workpiece M to the servo controller 2b on the basis of the processing data created by the CAD/CAM system 200.

Based on the control signal from the main controller 2a, the servo controller 2b causes the impingement unit 10 and the driving mechanism 30 to execute predetermined processing.

To give an example, the servo controller 2b controls the driving mechanism 30 so as to adjust the relative positional relation between the impingement unit 10 and the retaining unit 20 (workpiece W) so that the coordinate values included in the control signal and the laser beam focal point location match. Specifically, when matching a given set of coordinate values with the laser beam focal point location, the servo controller 2b drives the first driving motor 31a so as to move the objective optical system 10b along the Z axis by a predetermined amount. Moreover, the servo controller 2b drives the second driving motor 32a or the third driving motor 32b so as to move the slider unit 20a along the X axis or the Y axis by a predetermined amount. The servo controller 2b may also drive the fourth driving motor 33a or the fifth driving motor 33b so as to incline the support unit 20b along the A rotation axis or the B rotation axis through a predetermined angle (i.e. incline the workpiece W supported on the support unit 20b along the A rotation axis or the B rotation axis through a predetermined angle). Then, the servo controller 2b controls the impingement unit 10 (laser oscillator 10a) so as to impinge a laser beam with a predetermined spot diameter and intensity onto the predetermined location on the workpiece W corresponding to the aforementioned set of coordinate values.

In this way, the servo controller 2b in this embodiment can control the various driving motors in synchronized fashion.

Typically, for a laser beam impingement unit and a retaining unit for retaining a workpiece, driving motors having different characteristics conforming to the differences in the configurations that the motors drive are used. In laser beam processing apparatuses configured in this way, a separate servo controller is used for each of the impingement unit and the retaining unit, and since these servo controllers are not synchronized, complex operations such as moving the impingement unit along the Z axis while rotating the retaining unit along the A rotation axis, for example, cannot be performed. Thus, it is difficult to process complex shapes. Meanwhile, with the laser beam processing system 100 in this embodiment, dissimilar configurations such as the objective optical system 10b and the retaining unit 20 (slider unit 20a and support unit 20b) (in other words, driving motors having different characteristics) can be controlled in synchronized fashion by the servo controller 2b singly. Hence, processing of small target objects having a complex shape, such as dental prostheses, is made possible.

### ==CAD/CAM System==

The CAD/CAM system 200 illustrated in FIG. 1 creates the processing data and outputs same to the processing system 100. The processing data is data that is used by the processing system 100 when processing a target object. The processing data contains various information used in processing a workpiece W into a target object, such as X, Y, Z coordinate values representing the external shape of the target object, laser beam impingement intensity, and so on. The processing data is created on the basis of 3D data representing a target object and 3D data representing a workpiece. When processing a dental prosthesis, for example, the processing data is created using 3D data that is obtained by scanning the inside of a mouth using a charge-coupled device (CCD) camera or X-ray computed tomography (CT). The output data may be in any format as long as the data can be used by the processing system 100.

### ==Specific Configuration of Laser Beam Processing Apparatus==

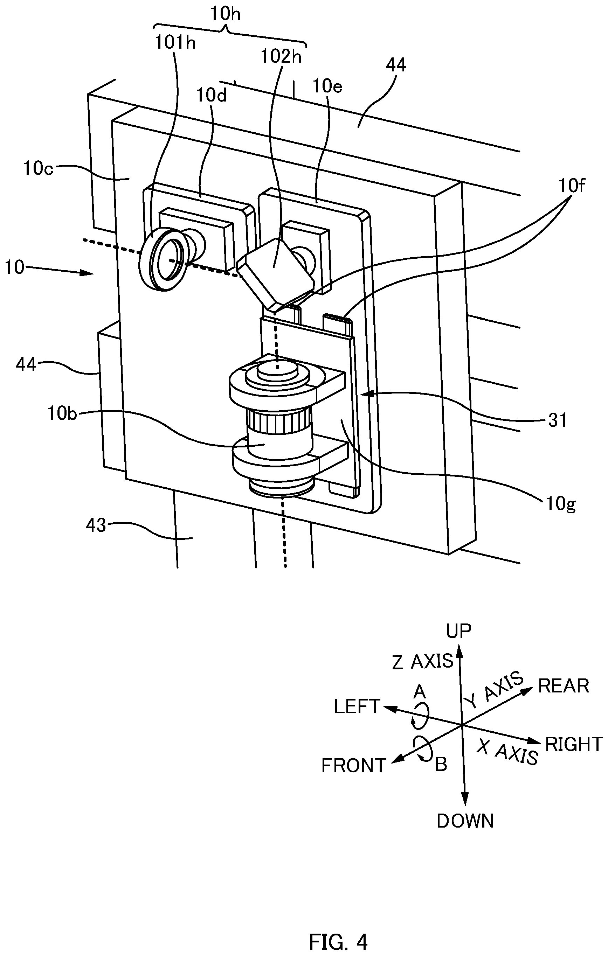

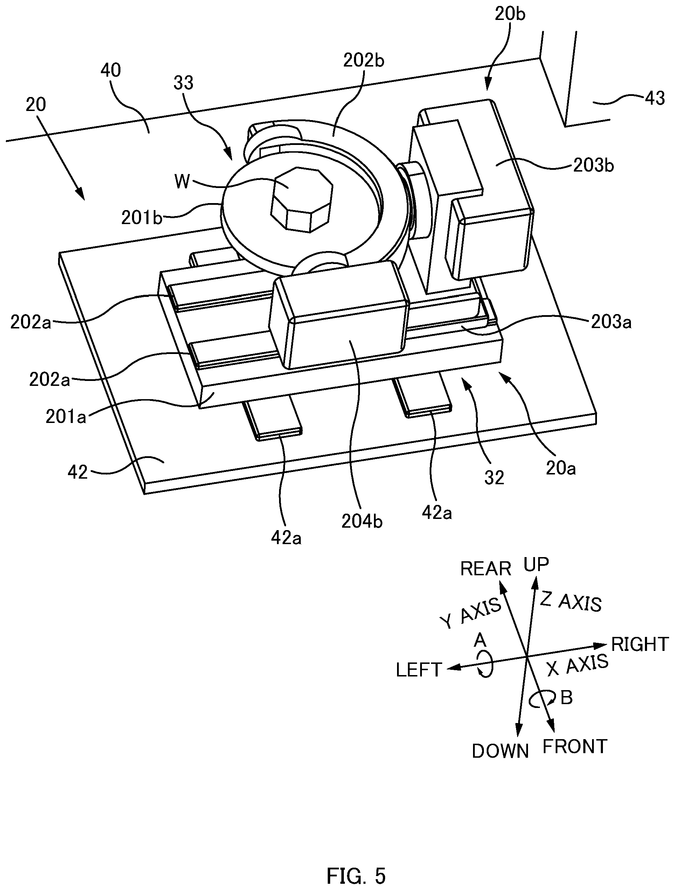

Next, a specific configuration of the laser beam processing apparatus 1 in this embodiment will be described with reference to FIGS. 3 through 5. FIG. 3 is a perspective diagram illustrating the entirety of the laser beam processing apparatus 1. In FIG. 3, some configurations, such as a housing, a cover, etc., which form the outer frame of the laser beam processing apparatus 1, are excluded from the illustration. In FIGS. 3 through 5, the left and right (leftward and rightward), the front and rear (forward and rearward), and up and down (upward and downward) relative to the front face of the laser beam processing apparatus 1 correspond to the X axis (X axis direction), the Y axis (Y axis direction), and the Z axis (Z axis direction), respectively. The X axis, the Y axis, and the Z axis are perpendicular to one another. In the condition illustrated in FIG. 3, the A rotation axis corresponds to a rotation axis about the X axis and the B rotation axis corresponds to a rotation axis about the Y axis perpendicular to the X axis. It is assumed that the laser beam processing apparatus 1 is placed on an X-Y plane defined by the X axis and the Y axis. Note that the aforementioned definition for the axes is only provided for the sake of convenience and is not limiting. For example, the X axis may correspond to the front and rear and the Y axis may correspond to the left and right. FIG. 4 is an enlarged perspective diagram of the impingement unit 10. FIG. 5 is an enlarged perspective diagram of the retaining unit 20.

### [Frame]

As illustrated in FIG. 3, the impingement unit 10 and the retaining unit 20 are disposed in a frame F. The frame F includes a pedestal 40, legs 41, a base member 42, columns 43, and beams 44.

The pedestal 40 is a rectangular board-like member forming the bottom side portion of the laser beam processing apparatus 1. A circular column-like leg 41 is provided on the lower side of each of the four corners of the pedestal 40. The base member 42 is provided on an upper-side partial region of the pedestal 40. The base member 42 is a rectangular board-like member on which the retaining unit 20 is placed. Two guiderails 42a extending in the Y axis direction are provided on the upper side of the base member 42. The retaining unit 20 is placed on the guiderails 42a. Note that the guiderails 42a may be provided directly on the upper side of the pedestal 40, in which case the base member 42 need not be provided. The necessary minimum number of guiderails 42a is one.

A column 43 is provided at each of the left and right ends of the pedestal 40 on the rear side. The columns 43 are prism-like members extending upward from the pedestal 40. The two beams 44 are prism-like members extending in the X axis direction and connect the two columns 43. The number and shape of the columns 43 and the beams 44 are not limited to the example illustrated in FIG. 3. For example, there may be provided three or more columns 43, and it is sufficient if there is one beam 44.

### [Impingement Unit]

As illustrated in FIGS. 3 and 4, the impingement unit 10 in this embodiment is fixed to the two beams 44. Aside from the objective optical system 10b, the impingement unit 10 includes a main body 10c, a base member 10d, a base member 10e, guiderails 10f, a slider 10g, and a relay optical system 10h. In this embodiment, the first driving motor 31a is provided inside the impingement unit 10 (in FIG. 3, etc., the illustration does not include the motor).

The main body 10c is a rectangular board-like member on which the objective optical system 10b, and the like, are disposed. The main body 10c is fixed to the beams 44. The base member 10d and the base member 10e are disposed on the front side of the main body 10c (the side thereof opposite the side fixed to the beams 44). The base member 10d is a rectangular board-like member to which the relay optical system 10h is fixed. The base member 10e is a rectangular board-like member to which the guid-erail 10f and the relay optical system 10h are fixed. Two guiderails 10f extending in the Z axis direction are disposed on the front side of the base member 10e (the side thereof opposite the side fixed to the main body 10c). The slider 10g is a rectangular board-like member that moves in the Z axis direction along the guiderails 10f. The first driving motor 31a moves the slider 10g along the guiderails 10f. The necessary minimum number of guiderails 10f is one.

The objective optical system 10b is, as described above, a configuration for impinging a laser beam from the laser oscillator 10a (not illustrated in FIGS. 3 and 4) onto the workpiece W placed on the retaining unit 20. The objective optical system 10b is disposed such that the optical axis thereof matches the Z axis. In this embodiment, the objective optical system 10b is fixed to the front side of the slider 10g (the side thereof opposite the side in contact with the guiderails 10f). This means that the objective optical system 10b can move along the Z axis as a result of the slider 10g moving along the Z axis.

The objective optical system 10b moving along the Z axis results in the laser beam focal point location changing in the Z axis direction. Accordingly, the focal point location can be made to coincide with a predetermined location in the Z axis direction on the basis of the processing data. In this example, the guiderails 10f, the slider 10g, and the first driving motor 31a form the first driving mechanism 31 that moves the objective optical system 10b along the Z axis.

The relay optical system 10h is fixed to the front side of the base member 10d or the base member 10e (the side thereof opposite the side fixed to the main body 10c) at a predetermined location. The relay optical system 10h includes: a relay lens 101h for guiding a laser beam (illustrated with a broken line in FIGS. 3 and 4) from the laser oscillator 10a along the X axis direction; and a mirror 102h for changing the direction of the laser beam guided by the relay lens 101h to the Z axis direction and guiding the laser beam toward the objective optical system 10b. The relay lens 101h is fixed to the base member 10d, and the mirror 102h is fixed to the base member 10e.

The configuration of the relay optical system 10h is not limited to what is illustrated in FIG. 3, and the like. For example, each of the relay lens 101h and the mirror 102h may be provided in a plurality. Meanwhile, an optical fiber may be used to allow light from the laser oscillator 10a to directly enter the objective optical system 10b, in which case the relay optical system 10h need not be provided. Further, the guiderails 10f and the relay optical system 10h may be disposed directly on the front side of the main body 10c, in which case the base member 10d and the base member 10e need not be provided.

### [Retaining Unit]

As illustrated in FIGS. 3 and 5, the retaining unit 20 includes a slider unit 20a and a support unit 20b.

The slider unit 20a receives fixation of the support unit 20b. As illustrated in FIGS. 3 and 5, the slider unit 20a in this embodiment includes a first slider 201a, guiderails 202a, and a second slider 203a. In this embodiment, the second driving motor 32a and the third driving motor 32b are provided inside the slider unit 20a (in FIG. 3, etc., the illustration does not include the motors).

The first slider 201a is a rectangular board-like member that moves in the Y axis direction along the two guiderails 42a provided on the pedestal 40. The first slider 201a can move by virtue of the third driving motor 32b.

Two guiderails 202a extending in the X axis direction are provided on the upper side of the first slider 201a. The necessary minimum number of guiderails 202a is one.

The second slider 203a is a rectangular board-like member that moves in the X axis direction along the guiderails 202a. The second slider 203a can move by virtue of the second driving motor 32a.

The support unit 20b (first rotation driver 203b) is fixed to the upper side of the second slider 203a. Accordingly, when the first slider 201a is moved along the Y axis, the support unit 20b also moves along the Y axis, and when the second slider 203a is moved along the X axis, the support unit 20b also moves along the X axis. In other words, the workpiece W supported on the support unit 20b can move along the Y axis or the X axis together with movement of the first slider 201a in the Y axis direction or movement of the second slider 203a in the X axis direction.

In this example, the first slider 201a, the guiderails 202a, the second slider 203a, the guiderails 42a, the second driving motor 32a, and the third driving motor 32b form the second driving mechanism 32 that moves the slider unit 20a along the X axis or the Y axis. The second driving mechanism 32 configured in this way is equivalent to a mechanism for positioning the workpiece W in the X-Y plane.

The support unit 20b is a configuration for supporting the workpiece W. As illustrated in FIGS. 3 and 5, the support unit 20b in this embodiment includes the stage 201b, an arm 202b, the first rotation driver 203b, and a second rotation driver 204b. In this embodiment, the fourth driving motor 33a is provided inside the first rotation driver 203b and the fifth driving motor 33b is provided inside the second rotation driver 204b (in FIG. 3, etc., the illustration does not include the motors).

The stage 201b is a member on which the workpiece W is placed. The stage 201b in this embodiment is a disc-like member.

The arm 202b is a member which rotatably supports the stage 201b. The arm 202b in this embodiment is a member having the shape of a half arc. The stage 201b is disposed on an inner side of the arc of the arm 202b. The arm 202b supports the stage 201b at both ends of the arm 202b in such a manner that the stage 201b is rotatable along the B rotation axis. The middle portion of the half arc of the arm 202b is connected to the first rotation driver 203b (a motor shaft of the fourth driving motor 33a). Note that as long as the stage 201b can be moved along the B rotation axis, the configuration of the arm 202b is not limited to the example above. For example, the arm 202b may be formed from a quadrangular frame member and the stage 201b may be disposed on an inner side of the member. In this case, the stage 201b may have any shape as long as the stage 201b is movable along the B rotation axis, and may be disc-like or rectangular.

The first rotation driver 203b is a mechanism for moving the arm 202b along the A rotation axis. The first rotation driver 203b is fixed to the slider unit 20a (second slider 203a). A motor shaft of the fourth driving motor 33a provided inside the first rotation driver 203b is disposed so as to be parallel to the X axis. Accordingly, the arm 202b moves along the A rotation axis as a result of driving of the fourth driving motor 33a, and thus, the stage 201b retained by the arm 202b (and the workpiece W placed on the stage 201b) can also move along the A rotation axis.

The second rotation driver 204b is a mechanism for moving the stage 201b along the B rotation axis. The second rotation driver 204b is fixed to one end of the arm 202b. A motor shaft of the fifth driving motor 33b provided inside the second rotation driver 204b is perpendicular to the motor shaft of the fourth driving motor 33a. As a result of driving of the fifth driving motor 33b, the stage 201b moves along an axis (the B rotation axis in the example illustrated in FIG. 3) that is perpendicular to the motor shaft of the fourth driving motor 33a, and thus, the workpiece W placed on the stage 201b can also move along the B rotational axis.

In this example, the stage 201b, the arm 202b, the first rotation driver 203b, the second rotation driver 204b, the fourth driving motor 33a, and the fifth driving motor 33b form the third driving mechanism 33 that moves the workpiece supported on the support unit 20b along the A rotation axis (first rotation axis) or the B rotation axis (second rotation axis). The third driving mechanism 33 is similar to a mechanism of a so-called two-axis gimbal. Note that, in the example illustrated in FIG. 3, for instance, the B rotation axis in a case in which the arm 202b has inclined through 90 degrees along the A rotation axis coincides with the rotation axis about the Z axis. In this way, in the example illustrated in FIG. 3, the axis that serves as the reference for the B rotation axis differs according to the inclination of the arm 202b. However, this axis will always be perpendicular to the axis (X axis in the example illustrated in FIG. 3) that serves as the reference for the A rotation axis.

As described above, the laser beam processing apparatus 1 in this embodiment includes: the objective optical system 10b for impinging a laser beam from the laser oscillator 10a onto the workpiece W; the retaining unit 20 that retains the workpiece W; and the driving mechanism 30 that moves the objective optical system 10b or the workpiece W retained by the retaining unit 20 along the five axes, i.e. the X axis, the Y axis, the Z axis, the first rotation axis, and the second rotation axis.

According to such a configuration, it is possible to carry out laser beam processing while moving the objective optical system 10b or the retaining unit 20 along the five axes, so a small target object for which complex processing is required can be created.

More specifically, the laser beam processing apparatus 1 includes: the retaining unit 20 that includes the slider unit 20a and the support unit 20b that is fixed to the slider unit 20a and supports the workpiece W; the first driving mechanism 31 that includes the first driving motor 31a for moving the objective optical system 10b along the Z axis; the second driving mechanism 32 that includes the second driving motor 32a for moving the slider unit 20a along the X axis and the third driving motor 32b for moving the slider unit 20a along the Y axis; and the third driving mechanism 33 that includes the fourth driving motor 33a for moving the workpiece W supported on the support unit 20b along the A rotation axis about the X axis and the fifth driving motor 33b for moving the workpiece W supported on the support unit 20b along the B rotation axis about the Y axis perpendicular to the X axis.

Thus, since the Z axis serves alone as the drive axis on the impingement unit 10 side, the optical axis can be fixed. As a result, a laser axis can be aligned easily. A target object such as a dental prosthesis is small and lightweight, so it is possible to use a workpiece that is also small and lightweight. In this regard, with the laser beam processing apparatus 1 in this embodiment, four drive axes can be provided on the retaining unit 20 side. The provision of four drive axes on the retaining unit 20 side makes it possible to dispose the workpiece in a variety of locations and orientations. Thus, even when the intended shape of the workpiece is complex, the workpiece can be processed with ease through adjustment of the location and/or orientation of the workpiece. Furthermore, the provision of a rotation axis on the retaining unit 20 side facilitates processing of not only the surface of the workpiece but also the reverse surface and/or side surfaces of the workpiece. In other words, with the laser beam processing apparatus 1 in this embodiment, multi-faceted processing of a workpiece can be performed.

Furthermore, with the laser beam processing apparatus 1 in this embodiment, the various driving motors are controlled in synchronized fashion singly by the servo controller 2b. According to such a configuration, even driving motors that have different characteristics can be controlled by a single controller. Accordingly, high-precision operations, such as performing 3D processing in X, Y, Z axis directions while allowing rotation along the A rotation axis, for example, are made possible, enabling processing of even complex shapes.

### <Second Embodiment>

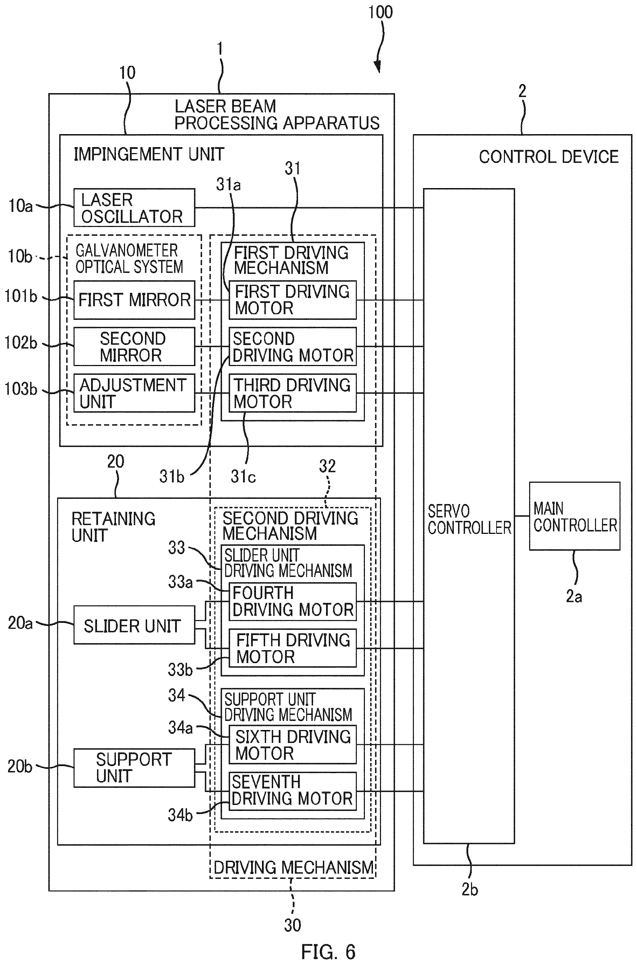

A laser beam processing system 100 in this embodiment will be described with reference to FIG. 6. In some cases, detailed description of configurations that are similar to those in the first embodiment, e.g. CAD/CAM system 200, may be omitted.

### ==Laser Beam Processing System==

### [Impingement Unit]

The impingement unit 10 impinges a laser beam onto a workpiece W. As illustrated in FIG. 6, the impingement unit 10 in this embodiment includes a laser oscillator 10a and a galvanometer optical system 10b.

The laser oscillator 10a is a configuration for oscillating a laser beam. The laser oscillator 10a is constituted by including, for example, a resonator, a lasing medium, and an excitation light source.

The galvanometer optical system 10b is a configuration for impinging a laser beam from the laser oscillator 10a onto the workpiece W. As illustrated in FIG. 6, the galvanometer optical system 10b in this embodiment includes a first mirror 101b, a second mirror 102b, and an adjustment unit 103b. The first mirror 101b is a configuration for moving a laser beam over the workpiece W along the X axis. The second mirror 102b is a configuration for moving a laser beam over the workpiece W along the Y axis. The adjustment unit 103b is a configuration for adjusting the laser beam focal point location in the Z axis direction. The adjustment unit 103b is a relay lens optical system formed from a single relay lens or a plurality of lens groups. Details of operation of the galvanometer optical system 10b will be described later.

The impingement unit 10 may include, for example, an optical system for guiding a laser beam from the laser oscillator 10a to the galvanometer optical system 10b or an optical system for converging the laser beam.

### [Retaining Unit]

The retaining unit 20 retains the workpiece W. In this embodiment, the (workpiece W retained by the) retaining unit 20 is movable along the X axis, the Y axis, the A rotation axis, and the B rotation axis (details will be described later). As illustrated in FIG. 6, the retaining unit 20 includes a slider unit 20a and a support unit 20b.

### [Driving Mechanism]

The driving mechanism 30 causes the galvanometer optical system 10b and the retaining unit 20 to operate. As illustrated in FIG. 6, the driving mechanism 30 in this embodiment includes a first driving mechanism 31 and a second driving mechanism 32.

The first driving mechanism 31 causes the galvanometer optical system 10b to operate. Specifically, the first driving mechanism 31 causes the first mirror 101b to operate so as to move a laser beam along the X axis, causes the second mirror 102b to operate so as to move a laser beam along the Y axis, and causes the adjustment unit 103b to operate so as to adjust the laser beam focal point location in the Z axis direction. The first driving mechanism 31 includes a first driving motor 31a for causing the first mirror 101b to operate, a second driving motor 31b for causing the second mirror 102b to operate, and a third driving motor 31c for causing the adjustment unit 103b to operate.

The second driving mechanism 32 moves the workpiece W retained by the retaining unit 20 at least along four axes, i.e. the X axis, the Y axis, the first rotation axis, and the second rotation axis. The second driving mechanism 32 includes a slider unit driving mechanism 33 and a support unit driving mechanism 34.

The slider unit driving mechanism 33 moves the slider unit 20a along the X axis or the Y axis. The slider unit driving mechanism 33 includes a fourth driving motor 33a for moving the slider unit 20a along the X axis and a fifth driving motor 33b for moving the slider unit 20a along the Y axis. As has been mentioned above, the support unit 20b is fixed to the slider unit 20a, so together with movement of the slider unit 20a, the support unit 20b also moves along the X axis or the Y axis. Thus, together with movement of the slider unit 20a, the workpiece W supported on the support unit 20b also moves along the X axis or the Y axis.

The support unit driving mechanism 34 moves the workpiece W supported on the support unit 20b along the A rotation axis or the B rotation axis. "Movement" along the A rotation axis or the B rotation axis includes "inclination", which means to incline through a predetermined angle about a given axis, and also "rotation", which means to move through 360 degrees or more about a given axis. The support unit driving mechanism 34 includes a sixth driving motor 34a for moving the workpiece W supported on the support unit 20b along the A rotation axis and a seventh driving motor 34b for moving the workpiece W supported on the support unit 20b along the B rotation axis.

The driving motors have differing characteristics (current, torque, rotational speed, etc.) according to the configurations which the motors drive; however, some of the driving motors may have the same characteristics.

The control device 2 controls operations of the impingement unit 10 and the driving mechanism 30. As illustrated in FIG. 6, the control device 2 in this embodiment includes a main controller 2a and a servo controller 2b.

The main controller 2a comprehensively controls the operations of the laser beam processing apparatus 1.

Based on the control signal from the main controller 2a, the servo controller 2b causes the impingement unit 10 and the driving mechanism 30 to execute predetermined processing.

To give an example, the servo controller 2b controls the driving mechanism 30 so as to adjust the relative positional relation between the impingement unit 10 and the retaining unit 20 (workpiece W) so that the coordinate values included in the control signal and the laser beam focal point location match. Specifically, when matching a given set of coordinate values with the laser beam focal point location, the servo controller 2b drives the third driving motor 31c so as to operate the adjustment unit 103b and thereby adjust the focal point location in the Z axis direction. Moreover, the servo controller 2b drives fourth driving motor 33a or the fifth driving motor 33b so as to move the slider unit 20a along the X axis or the Y axis by a predetermined amount. The servo controller 2b may also drive the sixth driving motor 34a or the seventh driving motor 34b so as to incline the support unit 20b along the A rotation axis or the B rotation axis through a predetermined angle (i.e. incline the workpiece W supported on the support unit 20b along the A rotation axis or the B rotation axis through a predetermined angle). Then, the servo controller 2b controls the impingement unit 10 (laser oscillator 10a) so as to impinge a laser beam with a predetermined spot diameter and intensity onto the predetermined location on the workpiece W corresponding to the aforementioned set of coordinate values.

Note that in this embodiment, the servo controller 2b may cause the first driving motor 31a or the second driving motor 31b to drive so as to cause each of the first mirror 101b or the second mirror 102b to operate, instead of (or concurrently with) moving the slider unit 20a along the X axis or the Y axis, thereby changing the laser beam impingement location in the X-Y plane.

Moreover, the servo controller 2b in this embodiment can control the various driving motors in synchronized fashion.

Typically, for a laser beam impingement unit and a retaining unit for retaining a workpiece, driving motors having different characteristics conforming to the differences in the configurations that the motors drive are used. In laser beam processing apparatuses configured in this way, a separate servo controller is used for each of the impingement unit and the retaining unit, and since these servo controllers are not synchronized, complex operations such as causing a first mirror and a second mirror to operate so as to impinge a laser beam onto the X-Y plane while rotating the retaining unit along the A rotation axis, for example, cannot be performed. Thus, it is difficult to process complex shapes. Meanwhile, with the laser beam processing system 100 in this embodiment, dissimilar configurations such as the galvanometer optical system 10b and the retaining unit 20 (slider unit 20a and support unit 20b) (in other words, driving motors having different characteristics) can be controlled in synchronized fashion by the servo controller 2b singly. Hence, processing of small target objects having a complex shape, such as dental prostheses, is made possible.

### ==Specific Configuration of Laser Beam Processing Apparatus==

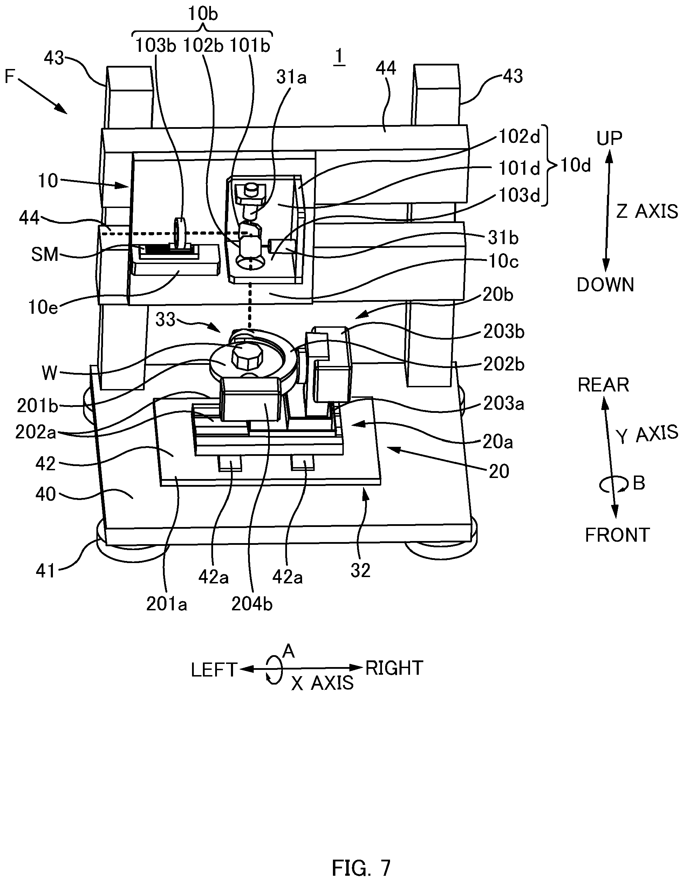

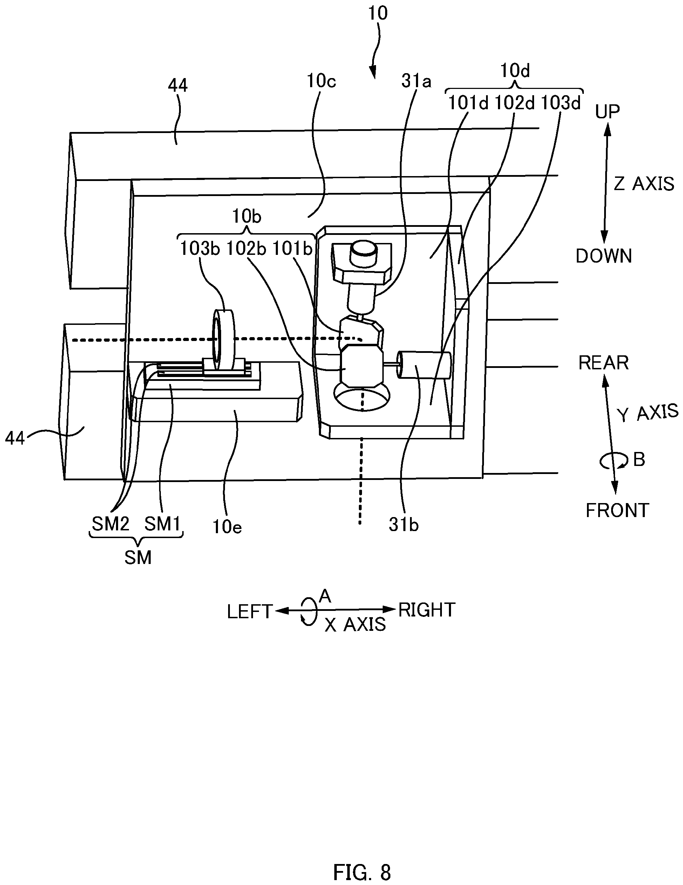

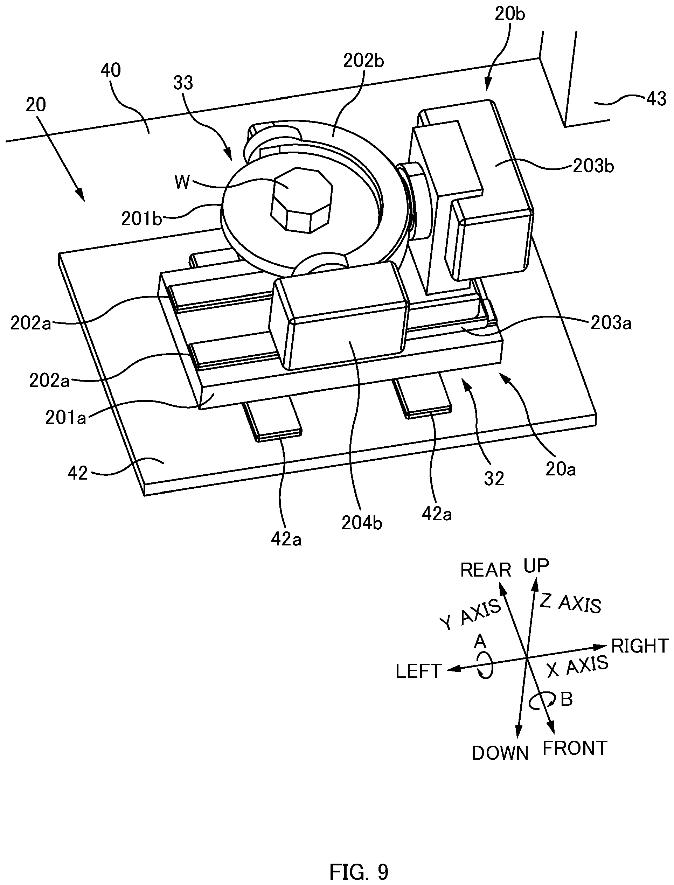

Next, a specific configuration of the laser beam processing apparatus 1 in this embodiment will be described with reference to FIGS. 7 through 9. FIG. 7 is a perspective diagram illustrating the entirety of the laser beam processing apparatus 1. In FIG. 7, some configurations, such as a housing, a cover, etc., which form the outer frame of the laser beam processing apparatus 1, are excluded from the illustration. In FIGS. 7 through 9, the left and right (leftward and rightward), the front and rear (forward and rearward), and up and down (upward and downward) relative to the front face of the laser beam processing apparatus 1 correspond to the X axis (X axis direction), the Y axis (Y axis direction), and the Z axis (Z axis direction), respectively. The X axis, the Y axis, and the Z axis are perpendicular to one another. In the condition illustrated in FIG. 7, the A rotation axis corresponds to a rotation axis about the X axis and the B rotation axis corresponds to a rotation axis about the Y axis perpendicular to the X axis. It is assumed that the laser beam processing apparatus 1 is placed on the X-Y plane defined by the X axis and the Y axis. Note that the aforementioned definition for the axes is only provided for the sake of convenience and is not limiting. For example, the X axis may correspond to the front and rear and the Y axis may correspond to the left and right. FIG. 8 is an enlarged perspective diagram of the impingement unit 10. FIG. 9 is an enlarged perspective diagram of the retaining unit 20.

### [Frame]

As illustrated in FIG. 7, the impingement unit 10 and the retaining unit 20 are disposed in a frame F. The frame F includes a pedestal 40, legs 41, a base member 42, columns 43, and beams 44.

### [Impingement Unit]

As illustrated in FIGS. 7 and 8, the impingement unit 10 in this embodiment is fixed to the two beams 44. Aside from the galvanometer optical system 10b, the impingement unit 10 includes a main body 10c, a first installation member 10d, a second installation member 10e, the first driving motor 31a, the second driving motor 31b, and a slider mechanism SM. In this embodiment, the third driving motor 31c may be provided, for example, inside the second installation member 10e (in FIG. 7, etc., the illustration does not include the motor).

The galvanometer optical system 10b is, as described above, a configuration for impinging a laser beam from the laser oscillator 10a (not illustrated in FIGS. 7 and 8) onto the workpiece W placed on the retaining unit 20. The galvanometer optical system 10b includes the first mirror 101b, the second mirror 102b, and the adjustment unit 103b. "Operation" of the first mirror 101b and the second mirror 102b includes "inclination", which means to incline through a predetermined angle about an axis, and also "rotation", which means to move through 360 degrees or more about an axis.

The main body 10c is a rectangular board-like member on which the galvanometer optical system 10b, and the like, are disposed. The main body 10c is fixed to the beams 44. The first installation member 10d and the second installation member 10e are disposed on the front side of the main body 10c (the side thereof opposite the side fixed to the beams 44).

The first installation member 10d is a member for installing the first mirror 101b and the second mirror 102b. The first installation member 10d includes a board-like member 101d, a first wall member 102d, and a second wall member 103d. The board-like member 101d is a rectangular member that is fixed to the front side of the main body 10c. The first wall member 102d is a rectangular member that extends in the Y axis direction from the right end portion of the board-like member 101d. The second wall member 103d is a rectangular member that extends in the Y axis direction from the lower end portion of the board-like member 101d. The lower end portion of the first wall member 102d and the right end portion of the second wall member are connected to each other. A hole for emitting a laser beam toward the workpiece W is provided in a portion of the second wall member 103d.

As illustrated in FIGS. 7 and 8, the first driving motor 31a is fixed to the board-like member 101d. A motor shaft of the first driving motor 31a is parallel to the Z axis. The first mirror 101b is provided on the leading end of the first driving motor 31a. The first mirror 101b operates (inclines or rotates) about the Z axis as a result of driving of the first driving motor 31a.

The second driving motor 31b is fixed to the first wall member 102d. A motor shaft of the second driving motor 31b is parallel to the X axis. The second mirror 102b is provided on the leading end of the second driving motor 31b. The second mirror 102b operates (inclines or rotates) about the X axis as a result of driving of the second driving motor 31b.

The second installation member 10e is a rectangular member that extends in the Y axis direction from the front side of the main body 10c. The slider mechanism SM is fixed to the upper side of the second installation member 10e.

The slider mechanism SM allows the adjustment unit 103b to move in the X axis direction. The slider mechanism SM includes a base member SM1 and two guiderails SM2 (see FIG. 8). The base member SM1 is a rectangular board-like member fixed to the second installation member 10e. The guiderails SM2 are disposed on the upper side of the base member SM1 along the X axis direction. The adjustment unit 103b is placed on the guiderails SM2. The necessary minimum number of guiderails SM2 is one. The third driving motor 31c moves the adjustment unit 103b along the guiderails SM2 (along the X axis). The laser beam focal point location in the Z axis direction changes as a result of the adjustment unit 103b being moved along the X axis. In other words, the focal point location in the Z axis direction can be adjusted by moving the adjustment unit 103b along the X axis.

The location (height) of the adjustment unit 103b (second installation member 10e) in the Z axis direction is such that a laser beam passing through the adjustment unit 103b hits the first mirror 101b. In other words, the adjustment unit 103b and the first mirror 101b are located on the optical axis of a laser beam emitted from the laser oscillator 10a.

In this embodiment, a laser beam emitted from the laser oscillator 10a passes through the adjustment unit 103b, hits the first mirror 101b, and is reflected in a given direction (e.g. a direction conforming to the Y axis). The laser beam reflected by the first mirror 101b hits the second mirror 102b so as to be reflected in a different direction from the given direction (e.g. a direction conforming to the Z axis), thereby impinging on the workpiece W. At this time, the laser beam can be moved along the X axis by causing the first mirror 101b to operate about the Z axis, whereas the laser beam can be moved along the Y axis by causing the second mirror 102b to operate about the X axis. Thus, by moving the first mirror 101b and the second mirror 102b at the same time, the laser beam can be moved on the X-Y plane. Furthermore, the laser beam focal point location in the Z axis direction can be changed by moving the adjustment unit 103b along the X axis direction. In other words, according to the galvanometer optical system 10b in this embodiment, the laser beam focal point location can be made to coincide with (a laser beam can be impinged onto) a predetermined location (X, Y, Z coordinate values) that accords with the processing data. In this example, the slider mechanism SM and the first driving motor 31a through the third driving motor 31c form the first driving mechanism 31.

### [Retaining Unit]

As illustrated in FIGS. 7 and 9, the retaining unit 20 includes a slider unit 20a and a support unit 20b.

The slider unit 20a receives fixation of the support unit 20b. As illustrated in FIGS. 7 and 9, the slider unit 20a in this embodiment includes a first slider 201a, guiderails 202a, and a second slider 203a. In this embodiment, the fourth driving motor 33a and the fifth driving motor 33b are provided inside the slider unit 20a (in FIG. 7, etc., the illustration does not include the motors).

The first slider 201a is a rectangular board-like member that moves in the Y axis direction along the two guiderails 42a provided on the pedestal 40. The first slider 201a can move by virtue of the fifth driving motor 33b.

Two guiderails 202a extending in the X axis direction are provided on the upper side of the first slider 201a. The necessary minimum number of guiderails 202a is one.

The second slider 203a is a rectangular board-like member that moves in the X axis direction along the guiderails 202a. The second slider 203a can move by virtue of the fourth driving motor 33a.

The support unit 20b (first rotation driver 203b) is fixed to the upper side of the second slider 203a. Accordingly, when the first slider 201a is moved along the Y axis, the support unit 20b also moves along the Y axis, and when the second slider 203a is moved along the X axis, the support unit 20b also moves along the X axis. In other words, the workpiece W supported on the support unit 20b can move along the Y axis or the X axis together with movement of the first slider 201a in the Y axis direction or movement of the second slider 203a in the X axis direction.

In this example, the first slider 201a, the guiderails 202a, the second slider 203a, the guiderails 42a, the fourth driving motor 33a, and the fifth driving motor 33b form the slider unit driving mechanism 33 that moves the slider unit 20a along the X axis or the Y axis. The slider unit driving mechanism 33 configured in this way is equivalent to a mechanism for positioning the workpiece W in the X-Y plane.

The support unit 20b is a configuration for supporting the workpiece W. As illustrated in FIGS. 7 and 9, the support unit 20b in this embodiment includes the stage 201b, an arm 202b, the first rotation driver 203b, and a second rotation driver 204b. In this embodiment, the sixth driving motor 34a is provided inside the first rotation driver 203b and the seventh driving motor 34b is provided inside the second rotation driver 204b (in FIG. 7, etc., the illustration does not include the motors).

The stage 201b is a member on which the workpiece W is placed. The stage 201b in this embodiment is a disc-like member.

The arm 202b is a member which rotatably supports the stage 201b. The arm 202b in this embodiment is a member having the shape of a half arc. The stage 201b is disposed on an inner side of the arc of the arm 202b. The arm 202b supports the stage 201b at both ends of the arm 202b in such a manner that the stage 201b is movable along the B rotation axis. The middle portion of the half arc of the arm 202b is connected to the first rotation driver 203b (a motor shaft of the sixth driving motor 34a). Note that as long as the stage 201b can be moved along the B rotation axis, the configuration of the arm 202b is not limited to the example above. For example, the arm 202b may be formed from a quadrangular frame member and the stage 201b may be disposed on an inner side of the member. In this case, the stage 201b may have any shape as long as the stage 201b is movable along the B rotation axis, and may be disc-like or rectangular.

The first rotation driver 203b is a mechanism for moving the arm 202b along the A rotation axis. The first rotation driver 203b is fixed to the slider unit 20a (second slider 203a). A motor shaft of the sixth driving motor 34a provided inside the first rotation driver 203b is disposed so as to be parallel to the X axis. Accordingly, the arm 202b moves along the A rotation axis as a result of driving of the sixth driving motor 34a, and thus, the stage 201b retained by the arm 202b (and the workpiece W placed on the stage 201b) can also move along the A rotation axis.

The second rotation driver 204b is a mechanism for moving the stage 201b along the B rotation axis. The second rotation driver 204b is fixed to one end of the arm 202b. A motor shaft of the seventh driving motor 34b provided inside the second rotation driver 204b is perpendicular to the motor shaft of the sixth driving motor 34a. As a result of driving of the seventh driving motor 34b, the stage 201b moves along an axis (the B rotation axis in the example illustrated in FIG. 7) that is perpendicular to the motor shaft of the sixth driving motor 34a, and thus, the workpiece W placed on the stage 201b can also move along the B rotational axis.

In this example, the stage 201b, the arm 202b, the first rotation driver 203b, the second rotation driver 204b, the sixth driving motor 34a, and the seventh driving motor 34b form the support unit driving mechanism 34 that moves the workpiece supported on the support unit 20b along the A rotation axis (first rotation axis) or the B rotation axis (second rotation axis). The support unit driving mechanism 34 is similar to a mechanism of a so-called two-axis gimbal. Note that, in the example illustrated in FIG. 7, for instance, the B rotation axis in a case in which the arm 202b has inclined through 90 degrees along the A rotation axis coincides with the rotation axis about the Z axis. In this way, in the example illustrated in FIG. 7, the axis that serves as the reference for the B rotation axis differs according to the inclination of the arm 202b. However, this axis will always be perpendicular to the axis (X axis in the example illustrated in FIG. 7) that serves as the reference for the A rotation axis.

As described above, the laser beam processing apparatus 1 in this embodiment includes: the galvanometer optical system 10b including the first mirror 101b for moving a laser beam from the laser oscillator 10a over the workpiece W along the X axis, the second mirror 102b for moving the laser beam over the workpiece W along the Y axis, and the adjustment unit 103b for adjusting the laser beam focal point location in the Z axis direction; the retaining unit 20 that retains the workpiece W; the first driving mechanism 31 that causes the first mirror 101b, the second mirror 102b, and the adjustment unit 103b to operate; and the second driving mechanism 32 that moves the workpiece W retained by the retaining unit 20 at least along the four axes, i.e. the X axis, the Y axis, the first rotation axis, and the second rotation axis.

According to such a configuration, it is possible to carry out laser beam processing while moving each of the galvanometer optical system 10b or the retaining unit 20 along predetermined axes, making microfabrication possible. Specifically, it is possible to move a laser beam in the X axis direction and Y axis direction and adjust the focal point location in the Z axis direction on the galvanometer optical system 10b side, while concurrently moving the workpiece W along the X and Y axes, the A rotation axis, and the B rotation axis on the retaining unit 20 side. Further, since the galvanometer optical system 10b is provided with a mechanism (adjustment unit 103b) that adjusts the focal point location in the Z axis direction, it is possible to accurately match the laser beam focal point location with a Z-axis coordinate value included in the processing data. In other words, with the laser beam processing apparatus 1 in this embodiment, even a target object that is small and requires complex processing can be created.

The retaining unit 20 includes the slider unit 20a and the support unit 20b that is fixed to the slider unit 20a and that supports the workpiece W, and the second driving mechanism 32 includes the slider unit driving mechanism 33 that moves the slider unit 20a along the X axis or the Y axis and the support unit driving mechanism 34 that moves the workpiece W supported on the support unit 20b along the first rotation axis or the second rotation axis.

A target object such as a dental prosthesis is small and lightweight, so it is possible to use a workpiece that is also small and lightweight. In this regard, with the laser beam processing apparatus 1 in this embodiment, at least four drive axes can be provided on the retaining unit 20 side. Such provision of four drive axes on the retaining unit 20 side makes it possible to dispose the workpiece in a variety of locations and orientations. Thus, even when the intended shape of the workpiece is complex, the workpiece can be processed with ease through adjustment of the location and/or orientation of the workpiece. Furthermore, the provision of a rotation axis on the retaining unit 20 side facilitates processing of not only the surface of the workpiece but also the reverse surface and/or side surfaces of the workpiece. In other words, with the laser beam processing apparatus 1 in this embodiment, multi-faceted processing of a workpiece can be performed.

Furthermore, with the laser beam processing apparatus 1 in this embodiment, the various driving motors are controlled in synchronized fashion singly by the servo controller 2b. According to such a configuration, even driving motors that have different characteristics can be controlled by a single controller. Accordingly, high-precision operations, such as moving a laser beam in X, Y axis directions while allowing rotation along the A rotation axis, for example, are made possible, enabling processing of even complex shapes.

### ==Others==

The configuration (including the shapes and disposition of the various configurations) of the laser beam processing apparatus 1 illustrated in FIG. 3 and the like is only an example. It is sufficient if the laser beam processing apparatus 1 of the present invention can move the objective optical system 10b or the workpiece W retained by the retaining unit 20 at least along five axes. Regarding the five drive axes, for example, a configuration can be adopted in which there are three drive axes (e.g. X, Y, Z axes) on the objective optical system side and two drive axes (e.g. A rotation axis and B rotation axis) on the retaining unit 20 side, or a configuration can be adopted in which there are five drive axes (X, Y, Z axes, A rotation axis, and B rotation axis) on the retaining unit 20 side. Further, it is also possible to further provide a driving mechanism which serves to, for example, move the objective optical system 10b along the X axis and the Y axis in the configurations of the aforementioned embodiments. In this case, the laser beam processing apparatus 1 would include a total of seven drive axes, i.e. three axes (X, Y, Z axes) on the objective optical system side and four axes (X, Y axes, A rotation axis, and B rotation axis) on the retaining unit side. Moreover, although the description above has given an example in which the objective optical system 10b alone is moved along the Z axis, there may be provided a driving mechanism which serves to, for example, move the entirety of the impingement unit 10 along the Z axis. In this case, the objective optical system 10b can move along the Z axis together with the impingement unit 10 moving along the Z axis.

The configuration (including the shapes and disposition of the various configurations) of the laser beam processing apparatus 1 illustrated in FIG. 7 and the like is only an example. The drive axes on the retaining unit 20 side may be constituted by five axes (X, Y, Z axes, A rotation axis, and B rotation axis), for example. Further, although the description above has given an example in which the galvanometer optical system 10b alone is caused to operate, there may be provided a driving mechanism which serves to, for example, move the entirety of the impingement unit 10 along the X, Y, Z axes while also moving the first mirror 101b, the second mirror 102b, and the adjustment unit 103b. In this case, the laser beam processing apparatus 1 would be capable of even more precise operations, further facilitating processing of even complex shapes.

Alternatively, a configuration may be adopted in which adjustment of the focal point location in the Z axis direction is carried out on the retaining unit side. In this case, the laser beam processing apparatus would be provided with: a galvanometer optical system including a first mirror for moving a laser beam from a laser oscillator over a workpiece along an X axis and a second mirror for moving the laser beam over the workpiece along a Y axis; a retaining unit that retains the workpiece; a first driving mechanism that causes the first mirror and the second mirror to operate; and a second driving mechanism that moves the workpiece retained by the retaining unit along five axes, i.e. the X axis, the Y axis, the Z axis, a first rotation axis, and a second rotation axis. According to such a laser beam processing apparatus, a configuration on the galvanometer optical system side can be simplified.

The target object is not limited to a small one with a complex shape, such as a dental prosthesis. For example, the target object may be an industrial component that is bigger and simpler in shape than a prosthesis, and even in this case, the target object can be processed using the laser beam processing apparatus 1 in the aforementioned embodiments.

The embodiments above serve to present examples of the invention, and it is not intended that the scope of the invention be limited to the embodiments. The configurations above may be subject to various omissions, substitutions, and changes as long as the spirit of the invention is maintained. The above embodiments and modification thereof are encompassed within the scope and spirit of the invention and are also encompassed within the scope of the invention set forth in the claims and equivalents thereof.

### Reference Signs List

1: laser beam processing apparatus
2: computer
2b: servo controller
10: impingement unit
10b: objective optical system
20: retaining unit
30: driving mechanism
100: laser beam processing system

## Claims

1. A laser beam processing apparatus, comprising
an objective optical system for impinging a laser beam from a laser oscillator onto a workpiece,
a retaining unit that retains the workpiece, and
a driving mechanism that moves the objective optical system or the workpiece retained by the retaining unit along five axes comprising an X axis, a Y axis, a Z axis, a first rotation axis, and a second rotation axis.

2. The laser beam processing apparatus according to claim 1, **characterized in that**
the retaining unit comprises
a slider unit, and
a support unit fixed to the slider unit and supporting the workpiece, and
the driving mechanism comprises
a first driving mechanism that moves the objective optical system along the Z axis,
a second driving mechanism that moves the slider unit along the X axis or the Y axis, and
a third driving mechanism that moves the workpiece supported on the support unit along the first rotation axis or the second rotation axis.

3. The laser beam processing apparatus according to claim 2, **characterized in that**
the first driving mechanism comprises a first driving motor for moving the objective optical system along the Z axis,
the second driving mechanism comprises a second driving motor for moving the slider unit along the X axis and a third driving motor for moving the slider unit along the Y axis,
the third driving mechanism comprises a fourth driving motor for moving the workpiece supported on the support unit along the first rotation axis and a fifth driving motor for moving the workpiece supported on the support unit along the second rotation axis, and
the driving motors are controlled by a single servo controller individually and in synchronized fashion.

4. A laser beam processing system, comprising
an objective optical system for impinging a laser beam from a laser oscillator onto a workpiece,
a retaining unit including a slider unit and a support unit fixed to the slider unit and supporting the workpiece,
a first driving mechanism comprising a first driving motor for moving the objective optical system along a Z axis,
a second driving mechanism comprising a second driving motor for moving the slider unit along an X axis and a third driving motor for moving the slider unit along a Y axis,
a third driving mechanism comprising a fourth driving motor for moving the workpiece supported on the support unit along a first rotation axis and a fifth driving motor for moving the workpiece supported on the support unit along a second rotation axis, and
a single servo controller for controlling the driving motors individually and in synchronized fashion.

5. A laser beam processing apparatus comprising:
a galvanometer optical system including a first mirror for moving a laser beam from a laser oscillator over a workpiece along an X axis, a second mirror for moving the laser beam over the workpiece along a Y axis, and an adjustment unit for adjusting the location of a focal point of the laser beam in a Z axis direction,
a retaining unit that retains the workpiece
a first driving mechanism that causes the first mirror, the second mirror, and the adjustment unit to operate, and
a second driving mechanism that moves the workpiece retained by the retaining unit along at least four axes comprising the X axis, the Y axis, a first rotation axis, and a second rotation axis.

6. The laser beam processing apparatus according to claim 5, **characterized in that**
the retaining unit comprises
a slider unit, and
a support unit fixed to the slider unit and supporting the workpiece, and
the second driving mechanism comprises
a slider unit driving mechanism that moves the slider unit along the X axis or the Y axis, and
a support unit driving mechanism that moves the workpiece supported on the support unit along the first rotation axis or the second rotation axis.

7. The laser beam processing apparatus according to claim 6, **characterized in that**
the first driving mechanism comprises a first driving motor for causing the first mirror to operate, a second driving motor for causing the second mirror to operate, and a third driving motor for causing the adjustment unit to operate,
the slider unit driving mechanism comprises a fourth driving motor for moving the slider unit along the X axis and a fifth driving motor for moving the slider unit along the Y axis,
the support unit driving mechanism comprises a sixth driving motor for moving the workpiece supported on the support unit along the first rotation axis and a seventh driving motor for moving the workpiece supported on the support unit along the second rotation axis, and
the driving motors are controlled by a single servo controller individually and in synchronized fashion.

8. A laser beam processing system comprising
a galvanometer optical system comprising a first mirror for moving a laser beam from a laser oscillator over a workpiece along an X axis, a second mirror for moving the laser beam over the workpiece along a Y axis, and an adjustment unit for adjusting the location of a focal point of the laser beam in a Z axis direction,
a retaining unit including a slider unit and a support unit fixed to the slider unit and supporting the workpiece,
a first driving mechanism comprising a first driving motor for causing the first mirror to operate, a second driving motor for causing the second mirror to operate, and a third driving motor for causing the adjustment unit to operate,
a slider unit driving mechanism comprising a fourth driving motor for moving the slider unit along the X axis and a fifth driving motor for moving the slider unit along the Y axis,
a support unit driving mechanism comprising a sixth driving motor for moving the workpiece supported on the support unit along a first rotation axis and a seventh driving motor for moving the workpiece supported on the support unit along a second rotation axis, and
a single servo controller for controlling the driving motors individually and in synchronized fashion.

9. A laser beam processing apparatus comprising:
a galvanometer optical system including a first mirror for moving a laser beam from a laser oscillator over a workpiece along an X axis and a second mirror for moving the laser beam over the workpiece along a Y axis,
a retaining unit that retains the workpiece
a first driving mechanism that causes the first mirror and the second mirror to operate, and
a second driving mechanism that moves the workpiece retained by the retaining unit along five axes comprising the X axis, the Y axis, a Z axis, a first rotation axis, and a second rotation axis.
